# EUROPEAN PATENT APPLICATION

(11) **EP 3 716 597 A1**
(43) Date of publication of application: **30.09.2020**
(21) Application number: 19166577.7
(22) Date of filing: 01.04.2019
(51) Int. Cl.: H04M 15/00, H04L 12/14, H04W 4/24

(54) **ASSISTANCE TO MOBILE OPERATORS IN THE PROVISION OF DATA SERVICES IN THE VISITED MOBILE NETWORK**

(30) Priority: 29.03.2019 RU 2019109354
(71) Applicant: UAB Demolita, 01108 Vilnius (LT)
(72) Inventor: Mykolaitis, Tomas, 07165 Vilnius (LT)
(74) Representative: Lapienis, Juozas

(57) **Abstract**

This invention refers to a field of mobile communication, in particular to the mechanism developed to encourage mobile subscribers located in the coverage area of a visited mobile network (while roaming) to use data services provided by a visited mobile operator.

The claimed invention is the mechanism of assistance to mobile operators in the provision of data services in the visited mobile network, which implementation could ensure achievement of the technical result allowing to involve more mobile subscribers to use data services in the visited mobile network, as well as the mobile app built-in software module, the computer readable medium, the user mobile device and hardware and software package that can implement the stages of this mechanism.

## Description

This invention refers to a field of mobile communication, in particular to the mechanism developed to encourage mobile subscribers located in the coverage area of a visited mobile network (while roaming) to use data services provided by a visited mobile operator.

As you know, roaming service is a significant part of both "visited" and "home" operators' revenues. Whereas, a trend of increase in the number of mobile subscribers travelling with different purposes can be observed and most mobile users are known to rarely use data services in the visited mobile network (i.e. Internet access while roaming) or use no such services at all because of their high costs. On the other hand, an increasing demand of mobile app users, who are mobile subscribers, for a continuous Internet access is known to ensure easy use of various mobile applications, which operation requires an available access to the Internet. At the same time, there are a number of third-party services designed for use by mobile subscribers while travelling abroad. The functionality of these data services can be frequently implemented via mobile apps installed on user mobile devices and it expects using mobile data services for the user to be provided with the information required in the course of travelling. The examples of these data services can be the following systems: hotel booking systems, air and railway ticket search and purchase systems, recommender systems of restaurants, cafes, hotels, entertainment events, and other help services for travellers. Besides, the third-party services used by mobile subscribers when travelling abroad can also include various OTT services.

Thus, there is a problem that at the time when these services can be preferably used (while travelling abroad), a mobile user prefers using no mobile data services, and is therefore prevented from the use of these services. On the other hand, mobile app developers and companies providing third-party services are interested in these services to be used and can compensate the user under certain conditions (e.g. provided that their use is maintained by advertising offers) a part of the data service osts in the visited mobile network.

The technology level is known for appropriate mechanisms and systems of assistance to mobile operators in the provision of data services in the visited mobile network based on delivery of these services on terms to be favourable for mobile subscribers thanks to sponsoring by third parties, e.g. advertisers. Examples of similar systems and mechanisms are disclosed in patent documents US WO 20180146361 and 2018067115.

The patent document US 20180146361 describes a system that implements a mechanism of assistance to mobile operators in the provision of data services in the visited mobile network by changing the mobile subscriber identity (IMSI) to another one assuming cheaper data service rates. However, this mechanism requires a user to have a special SIM card that can support multiple IMSI and a possibility of activation of this or that profile depending on the mobile subscriber location. Additionally, this mechanism requires a change of subscriber's phone number, which can be highly inconvenient for the subscriber.

The patent document WO 2018067115 describes the system selected as a prototype of this invention and built in the current interaction structure of at least two "home" and "visited" mobile networks that implements unloading data links used by mobile operators and redistributing priorities in the use of mobile data links assigned to mobile app users, who are mobile subscribers, which can be implemented due to third-party sponsoring. A particular case of this system implementation is to grant a mobile subscriber the Internet access at the expense of the advertiser that places advertising offers before and during the subscriber's access to the Internet. However, as described in this document, the assistance system and mechanism assume a precise tracking of the mobile subscriber's location, e.g. using GPS, and therefore, imply binding not only to a specific mobile network but to the subscriber's location as well. In its turn, there is a problem to get a mobile subscriber (a mobile app user), whose mobile device has a deactivated mobile data service (or activated data service across a Wi-Fi network or via any other data links not using mobile data service), interested in using data services provided by a visited mobile operator on favourable terms.

Thus, the objective of this invention is to develop a mechanism of assistance to mobile operators in the provision of data services in the visited mobile network, which implementation could ensure achievement of the technical result allowing to involve more mobile subscribers to use data services in the visited mobile network, as well as to develop a mobile app built-in software module, a computer readable medium, a user mobile device, and hardware and software package that can implement stages of this mechanism.

This invention objective can be achieved by developing a mechanism of assistance to mobile operators in the provision of data services in the visited network that includes identifying a mobile subscriber and/or mobile app user, finding an opportunity to offer to the mobile subscriber to use a data service package in the visited network, generating the data service package in the visited network and agreeing it with the home and visited mobile operator and third-party services, offering to use the data service package in the visited network on the terms other than standard ones for data services in the visited network, activating the visited network data service package provided to the mobile subscriber on the offered terms, maintaining the mobile subscriber' use of the visited network data service package provided to the mobile subscriber on the offered terms, deactivating the visited network data service package provided to the mobile subscriber on the offered terms, and activating the visited network data services on standard terms. Besides, a relevant software module built in a mobile app is developed for the claimed assistance mechanism. This software module contains program instructions that implement identifying a mobile subscriber and/or mobile app user, finding an opportunity to offer to the mobile subscriber to use a data service package in the visited network, offering to use the data service package in the visited network on terms other than standard ones for data services in the visited network, activating/deactivating the visited network data service package provided to the mobile subscriber on the offered terms. Additionally, the invention objective can be achieved by using a computer readable medium containing the claimed program module and respective user mobile device containing the specified computer readable medium.

The invention objective can be also achieved by developing a software and hardware package that comprises at least two mobile networks providing data services, a traffic management server configured with the possibility of traffic distribution, monitoring of subscriber traffic use prioritizing, and management of the subscriber access to the Internet, and at least one user mobile device, wherein the traffic management server is configured to perform telecommunications equipment operation logging functions, Internet traffic billing between mobile networks; both the traffic management server and user mobile device are configured with the possibility of joint implementation of all stages of the claimed assistance mechanism, wherein one of the mobile networks is a home network and the other one is a visited network.

The identification of a mobile subscriber and mobile app user preferably includes searching mobile app user identifiers and binding them to mobile network identifiers and/or mobile subscriber identity.

Finding an opportunity to offer a mobile subscriber to use a data service package in the visited mobile network preferably includes receiving a tag of mobile subscriber's availability in the visited mobile network, determining a status of the mobile data service function, and/or identifying a user need to use the data services when using mobile applications. The latter, in its turn, can be preferably implemented by evaluation of the data service mobile app usage statistics, availability of any mobile apps installed on the user mobile device and typically used by mobile subscribers when travelling abroad (e.g. recommender systems of restaurants, cinemas, city maps, information websites, hotel reservation systems and others). Additionally, a check can be performed of whether data services via Wi-Fi network or other comm links using no mobile data services are activated.

In one of the preferred embodiment options of this invention, the mutual settlement between the mobile subscriber, the visited and home networks and third-party services shall be performed before activation or after deactivation of the data service package in the visited network provided to the mobile subscriber on the offered terms. Thereat, the mutual settlement between the mobile subscriber, the visited and home networks and third-party services shall be preferably performed after the mobile subscriber's confirmation of the offered terms to use the data service package in the visited network. Thus, companies providing third-party services (e.g. OTT services), or developers of mobile apps generally used by mobile subscribers when travelling abroad can be provided with an opportunity of sponsoring the use of the data service package (i.e. the subscriber access to the Internet) in the visited network. Mobile user's payment can be preferably performed in the following ways: bank card, particularly tied to the mobile app, which the claimed software module is built in, from the user's account of mobile app, which the claimed software module is built in, sponsor package (e.g. OTT service or third-party mobile app), promo code, e-payment service (e.g. Apple Pay, Google Pay, Masterpass, AliPay, PayPal, etc.)

The generation of a data service package shall preferably include definition of its parameters and provision conditions.

The maintaining of the visited network data service package provided to the mobile subscriber on the offered terms shall preferably include sending the mobile subscriber at least one advertising offer. The maintaining of the data service package use in the visited network shall also preferably include monitoring data service usage and scope limit, billing, transfer quality control, data generation for billing, including CDR and/or TAP files, and other functions.

In one of the preferred invention embodiment options, the software module additionally includes program instructions that implement locating any found user IDs in the data warehouse and their subsequent use to bind them to mobile network identifiers and/or mobile subscriber identity. As a data warehouse, a local data storage located in the user device as well as a remote data storage located in the traffic management server included in the hardware and software package can be used according to one of the invention aspects.

Cookies, user IDs of mobile apps with built-in software modules, identifiers of the SW modules themselves, social network authorization tokens, mobile messaging application (e.g. WhatsApp, Viber, Telegram, WeChat, etc.) identifiers and other non-personal digital IDs can be preferably used as mobile app user identifiers.

Binding user IDs to mobile network identifiers and/or mobile subscriber identity can be preferably performed in the following ways: matching, user's entry of his/her subscriber number, mobile connect procedure, use of messaging application identifiers related to subscriber numbers.

An offer to use the data service package in the visited network can be preferably implemented in the following ways: push-notifications via the claimed software module, push-notifications using the identifier of the application, which the claimed software module is built in, messaging application identifiers, social network identifiers, SMS messages, USSD messages, EMAIL messages, banner advertising.

The activation/deactivation of the visited network data service package provided to the mobile subscriber on the offered terms can preferably include procedures of changing the packet data network identifier (APN) installed in the user mobile device.

You should appreciate that the Internet traffic billing between the mobile networks (visited and home) implemented by the traffic management server shall be preferably performed on the terms agreed between the visited and home networks and third-party service (e.g. OTT service) that is interested in using the data services by user and accepted by the mobile subscriber. Therewith, it should be clear that the specified Internet traffic rates for the mobile subscriber will differ from the standard rates established between the visited and home networks.

The functions of telecommunication equipment logging and Internet traffic billing between the mobile networks implemented by the traffic management server shall be preferably performed by generation of CDR (Call Detail Record) and/or TAP (Transferred Account Procedures) files for the home network. Therewith, the generation of these data shall be performed subject to the terms agreed between the visited and home networks, and offered and accepted by the user, i.e. the Internet traffic cost for the user will differ from the standard one established between the visited and home networks.

Thus, the identification of a mobile subscriber to be a built-in software module mobile app user, who has used the Internet access services by another way than the data services in the visited network (e.g. using Wi-Fi access), and offer to use the data service package in the visited network shall be performed according to one of the preferred invention embodiment options. If the mobile subscriber confirms the offered terms to use the data service package in the visited network, the activation of this data service package shall be performed while the Internet traffic rates for the mobile subscriber will differ from the standard rates established between the visited and home networks.

You should appreciate that the described offer to use the data service package in the visited network shall be preferably made to those users who normally use no mobile data services on standard terms but, nevertheless, interested in the use of various third-party services (e.g. OTT services) or mobile apps using mobile roaming services, i.e. the visited network.

The above mentioned invention embodiment options can be equally applied to all claimed invention aspects, namely, the software module, the assistance mechanism for mobile operators in the provision of data services in the visited mobile network, the computer readable medium containing the stored software module, the user mobile device containing the specified computer readable medium and hardware and software package that contains at least one specified user mobile device.

These preferred invention embodiment options are given as examples and do not limit the scope of claims on this application, therewith the claimed invention can be implemented in any other form but characterized by the above distinguishing features.

The claimed invention is shown in the Figures explained below.

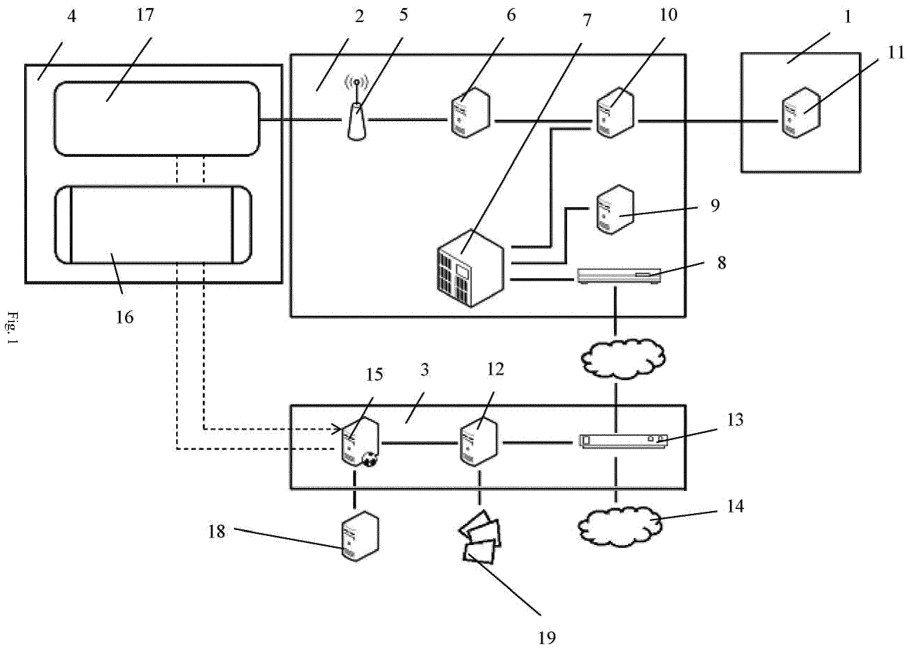

The figure 1 is a block diagram of the hardware and software package according to one of the preferred invention embodiment options. According to this preferred invention embodiment option, the hardware and software package contains two mobile networks providing data services: home mobile network 1 of home mobile operator and visited mobile network 2 of visited mobile operator, system 3 implementing the mechanism of assistance to mobile operators in the provision of data services in the visited mobile network, and user mobile device 4. Visited network 2 is represented by the following interrelated elements: base station 5, base station controller 6 that manages operation of multiple base stations, GPRS (SGSN) subscriber servicing node 7 that implements packet data processing functions GPRS Core network, node 8 of data routing between GPRS Core network and external IP networks (GGSN), in particular with system 3, home mobile subscriber database 9, mobile switch 10 that provides common call and Internet traffic routing. To simplify the block diagram home network 1 is represented by home mobile subscriber database 11 only. System 3 is represented by the following elements: traffic management server 12 that performs traffic distribution, monitoring of subscriber traffic use prioritizing and management of the subscriber access to the Internet as well as in this preferred invention embodiment option provides communications with gateway 13, analyzes information received from mobile subscribers and initiates service-related activities; gateway 13 that provides data routing and mobile network communication with Internet network 14; system 15 of targeting and display of advertising offers for mobile subscribers. The user mobile device 4 contains an installed mobile application 16 with built-in software module 17 implemented according to this invention. System 15 is connected with third-party services 18 (in particular, with advertising platforms) and server 12 is connected with e-payment services 19.

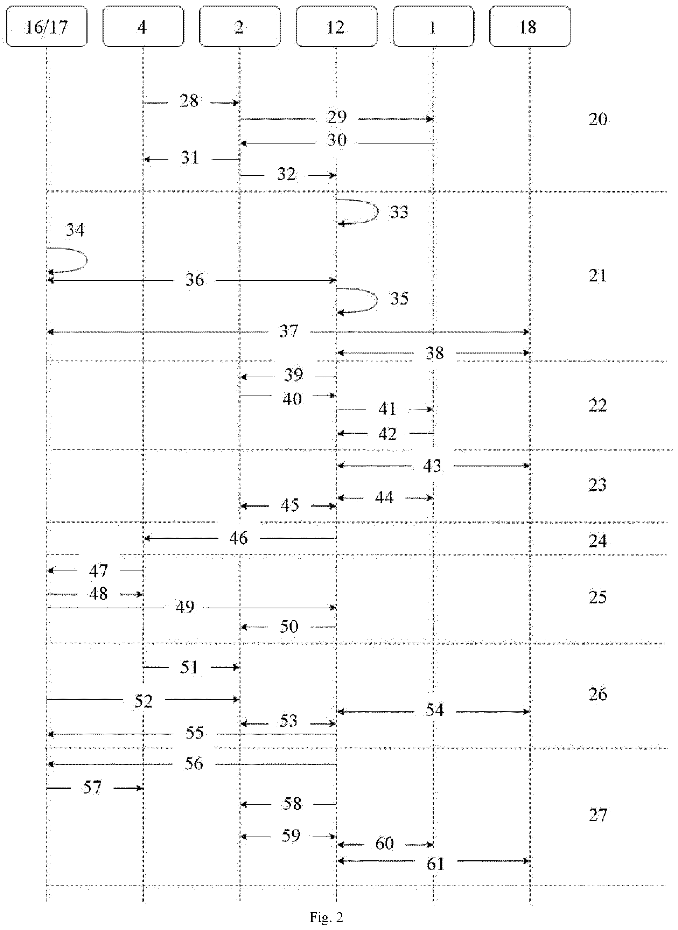

Fig. 2 is a block diagram illustrating a preferred invention embodiment option with reference to the technical equipment of the software and hardware package shown in Fig. 1. The diagram shows the following data nodes of the hardware and hardware package: mobile app 16 with built-in software module 17 implemented according to this invention, user mobile device 4 in which the app 16 is installed, visited network 2, traffic management server 12, home network 1, third-party services 18 (in particular, advertising platforms). The illustrated preferred invention embodiment option can be divided into the following successive stages: Block 20 - Register mobile subscriber in visited network 2; Block 21 - Identify mobile subscriber (mobile app user); Block 22 - Find an opportunity to offer to mobile subscriber to use data service package in visited network 2; Block 23 - Generate data service package in visited network 2 and agree it with home and visited operators and third-party services 18; Block 24 - Offer to use data service package in visited network on terms other than standard terms of data services in visited network Block 25 - Activate visited network data service package provided to mobile subscriber on offered terms; Block 26 - Maintain mobile user's use of visited network data service package provided to mobile subscriber on offered terms; Block 27 - Deactivate visited network data service package provided to mobile subscriber on offered terms and activate data service package in visited network on standard terms.

Initially, system 3 lacks CDR data and/or TAP data, or other data used for traffic billing. At the first stage, mobile subscriber, mobile app user 16 with built-in software module 17 installed on mobile device 4 enters the coverage area of visited network 2, mobile subscriber is automatically registered in visited network 2, wherein at first, request 28 is sent to register in visited network 2 from mobile device user 4, then relevant request 29 is transferred from visited network 2 to home network 1, home network 1 sends relevant confirmation 30 to visited network 2, then relevant confirmation 31 is transmitted to user mobile device 4, and notice 32 of registration in network 2 is sent to traffic management server 12. At the next step (Block 21), mobile subscriber and mobile app user identification procedures 33, 34, 35 are executed both locally in software module 17 and server 12, and exchange 36 of identification data between them, data exchange 37 between user mobile app 16 and third-party services 18, and data exchange 38 between server 12 and third-party services 18 occur. Data exchange 36 and 37 can be performed if mobile data services are deactivated in user mobile device 4 (or data services via Wi-Fi or other comm links using no mobile network are activated). Block 21 procedures perform searching mobile user identifiers and binding them to mobile network IDs and mobile subscriber identity (IMSI/MSISDN). it should be clear as well that the identification procedures can use identification information previously obtained, e. g., when a mobile subscriber was in the home network. At the next stage (Block 22), server 12 sends to visited network 2 a request 39 related to the subscriber's use of data services in the visited network and receives a respective response 40. Then, server 12 sends a request 41 to home network 1 about whether it is possible to offer the use of data service package in visited network 2 on terms other than standard terms of data service in visited network 2 and receives a respective response 42. The next stage (Block 23) includes data exchange procedures 43, 44 and 45 aimed to generate data service package in visited network 2 and agree it with home network 1, visited network 2 and third-party services 18. Then (Block 24), server 12 sends an offer 46 of the generated and agreed data service package in visited network 2 that the user receives, for example, by push notification via the claimed software module. Then (Block 25), 47 and 48 package activation procedures are started up, for example, by changing the packet data network identifier (APN), respective information 49 is sent to traffic management server 12 and activation data 50 is sent from server 12 to visited network 2. At the stage of package use maintenance (Block 26), data transfer 51 between user mobile device 4 and visited network 2 as well as data transfer 52 from user mobile app 16 of visited network 2 take place. Also, server 12 performs data exchange 53 with visited network 2, in particular provides traffic use data to node 8, which is a part of visited network 2, for correct generation of CDR and TAP files, thus allowing to avoid incorrect billing, and exchanges information on data service usage and scope limit, billing, data service quality control, and billing information. Thus, double billing can be avoided, and billing is performed on the terms agreed between the system 3, visited network 2, home network 1 and third-party services 18. Server 12 exchanges data 54 with third-party services 18 to generate advertising offers and sends a mobile subscriber advertising offer data 55. Block 27 performs data exchange 56, 57, 58 to deactivate the data service package and data exchange 59, 60 and 61 to execute the mutual settlement between the parties. It should be clear that at this stage server 12 can also interact with e-payment services 19 (not shown in Fig. 2).

Thus, the claimed invention is the mechanism of assistance to mobile operators in the provision of data services in the visited mobile network, which implementation could ensure achievement of the technical result allowing to involve more mobile subscribers to use data services in the visited mobile network, as well as the mobile app built-in software module, the computer readable medium, the user mobile device and hardware and software package that can implement the stages of this mechanism.

You should appreciate that the claimed invention as defined in the attached "Claim" shall not be compulsorily limited to the specific features and embodiment options described above. On the contrary, the specific features and embodiment options described above are disclosed as the Claim implementation examples but other equivalent features can be covered by the Claim as well.

## Claims

1. The mechanism of assistance to mobile operators in the provision of data services in the visited mobile network includes:
Identify a mobile subscriber and/or mobile app user
Find an opportunity to offer to the mobile subscriber to use a data service package in the visited network
Generate the data service package in the visited network and agree it with home and visited operators and third-party services
Offer to use the data service package in the visited network on the terms other than standard terms of data services in the visited network
Activate the visited network data service package provided to the mobile subscriber on the offered terms
Maintain mobile subscriber's use of the visited network data service package provided to the mobile subscriber on the offered terms
Deactivate the visited network data service package provided to the mobile subscriber on the offered terms and activate the visited network data service package on standard terms

2. The mechanism acc. to para. 1 differs in the aspect that the mobile subscriber and mobile app user identification includes searching mobile app user identifiers and binding them to the mobile network identifiers and/or mobile subscriber identity.

3. The mechanism acc. to para. 1 differs in the aspect that the finding of an opportunity to offer the mobile subscriber to use the data service package in the visited network includes receiving a tag of mobile subscriber's availability in the visited network, determining a status of the mobile data services, and/or identifying a user need to use the data services when using mobile applications.

4. The mechanism acc. to para. 1 differs in the aspect that the mutual settlement between the mobile subscriber, the visited and home networks and third-party services shall be performed before activation or after deactivation of the visited network data service package provided to the mobile subscriber on the offered terms.

5. The mechanism acc. to para. 4 differs in the aspect that the mutual settlement between the mobile subscriber, the visited and home networks and third-party services shall be performed after the mobile subscriber's confirmation of the offered terms to use the data service package in the visited network.

6. The mechanism acc. to para. 1 differs in the aspect that the generation of the data service package includes definition of its parameters and provision conditions.

7. The mechanism acc. to para. 1 differs in the aspect that the maintaining of the visited network data service package provided to the mobile subscriber on the offered terms includes sending the mobile subscriber at least one advertising offer.

8. Mobile app built-in software module containing program instructions that can implement the following:
Identify a mobile subscriber and/or mobile app user
Find an opportunity to offer to the mobile subscriber to use a data service package in the visited network
Offer to use the data service package in the visited network on the terms other than standard terms of data services in the visited network
Activate/deactivate the visited network data service package provided to the mobile subscriber on the offered terms

9. The software module acc. to para. 8 differs in the aspect that the identification of the mobile subscriber and mobile app user includes searching mobile app user identifiers and binding them to the mobile network identifiers and/or mobile subscriber identity.

10. The software module acc. to para. 8 differs in the aspect that the finding of an opportunity to offer the mobile subscriber to use the data service package in the visited network includes receiving a tag of mobile subscriber's availability in the visited network, determining a status of the mobile data services, and/or identifying a user need to use the data services when using mobile applications.

11. The software module acc. to para. 8 differs in the aspect that it contains program instructions implementing the subscriber's confirmation of the offered terms to use the data service package in the visited network.

12. Computer readable medium containing the stored software module acc. to para. 8-11.

13. User mobile device containing the computer readable medium acc. to para. 12.

14. The hardware and software package containing
at least two mobile networks providing the data services,
traffic management server implemented with the possibility to distribute traffic, monitor subscriber traffic use prioritizing and manage subscriber access to Internet,
at least one user mobile device
that differs in the aspect that the traffic management server is configured to perform functions of telecommunication equipment logging, Internet traffic billing between the mobile networks; both the traffic management server and user mobile device are configured with the possibility of joint implementation of all stages of the assistance mechanism according to para. 1, wherein one of the mobile networks is a home network and the other one is a visited network.

15. The hardware and software package acc. to para. 14 differing in the aspect that the traffic management server and/or user mobile device are configured with the possibility to perform identification of the mobile subscriber and mobile app user by searching mobile app user identifiers and binding them to the mobile network identifiers and/or mobile subscriber identity.

16. The hardware and software package acc. to para. 14 differing in the aspect that the traffic management server and/or user mobile device are configured with the possibility to find an opportunity to offer the mobile subscriber to use the data service package in the visited network by receiving a tag of mobile subscriber's availability in the visited network, determining a status of the mobile data services, and/or identifying a user need to use the data services when using mobile applications.

17. The hardware and software package acc. to para. 14 differing in the aspect that the traffic management server and/or user mobile device are configured with the possibility to perform the mutual settlement between the mobile subscriber, the visited and home networks and third-party services before activation or after deactivation of the visited network data service package provided to the mobile subscriber on the offered terms.

18. The hardware and software package acc. to para. 17 differing in the aspect that the traffic management server and/or user mobile device are configured with the possibility to perform the mutual settlement between the mobile subscriber, the visited and home networks and third-party services after the mobile subscriber's confirmation of the offered terms to use the data service package in the visited network.

19. The hardware and software package acc. to para. 14 differing in the aspect that the traffic management server and/or user mobile device are configured with the possibility to generate the data service package by defining its parameters and provision conditions.

20. The hardware and software package acc. to para. 14 differing in the aspect that the traffic management server and/or user mobile device are configured with the possibility to maintain the mobile subscriber's use of the visited network data service package provided to the mobile subscriber on the offered terms, including sending the mobile subscriber at least one advertising offer.
